# EUROPÄISCHE PATENTSCHRIFT

(11) **EP 2 687 071 B1**
(45) Veröffentlichungstag und Bekanntmachung des Hinweises auf die Patenterteilung: **23.03.2016**
(21) Anmeldenummer: 13401062.8
(22) Anmeldetag: 27.06.2013
(51) Int. Cl.: A01B 15/02, A01B 3/46, A01B 15/08

(54) **Pflug, insbesondere Drehpflug**
Plough, in particular reversible plough
Charrue, notamment charrue brabant

(30) Priorität: 18.07.2012 DE 102012106459
(43) Veröffentlichungstag der Anmeldung: 22.01.2014
(60) Teilanmeldung: 15197683.4
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE); Resch, Rainer, 49170 Hagen a TW (DE); Withake, Gustav, 48496 Hopsten (DE)

(56) Entgegenhaltungen:
- DE-C3- 2 746 527
- DE-U- 1 913 507
- US-A- 2 101 661

## Beschreibung

Die Erfindung bezieht sich auf einen Pflug, insbesondere einen Drehpflug mit einem an einem Anbaubock zur Verbindung des Pfluges mit einem landwirtschaftlichen Schlepper befestigbaren, vorzugsweise über ein Stützrad auf dem Erdboden abstützbaren Pflugrahmen mit zumindest einer an dem Pflugrahmen angeordneten Pflugscharreihe, die jeweils Pflugkörper mit einer Pflugschar und einem Streichblech aufweist, mit welchem ein Furchenbalken des zu bearbeitenden Erntebodens einem dynamischen Wendevorgang zu unterziehen ist, und mit einem sich in Arbeitsrichtung des Pfluges hinter der Pflugschar angeordneten, sich in Richtung einer Furchensohle des zu bearbeitenden Erntebodens hin erstreckenden Leitorgan.

Ein Pflug der vorgenannten Art ist aus dem DE 19 13 507 U bekannt. Die dortigen im Querschnitt im Wesentlichen schaufelförmig gestalteten und mit einer kurvenförmigen Kontur gegen die Arbeitsrichtung weisend ausgebildeten Streichbleche dienen insbesondere dazu, den auszuschneidenden Furchenbalken des zu bearbeitenden Erntebodens einem dynamischen Wendevorgang zu unterziehen, um eine Furche auszuräumen und den Furchenbalken neben der Furche abzulegen.

Dieser Pflug hat ein mit Abstand hinter der Pflugschar angeordnetes Leitorgan, das über Schrauben an dem Streichblech in Langlöchern zwecks relativer Lageverstellung an dem Streichblech zu befestigen ist. Das vorgesehene Leitorgan erstreckt sich bis zur Furchensohle. Dadurch soll ein Zurückfallen von einzelnen Krümeln des aufgeworfenen Furchenbalkens unter das Streichblech verhindert werden. Aufgrund der Tiefenerstreckung und der relativen Größe dieses Leitorgans wird jedoch der Zugkraftbedarf des Pfluges beim Pflügen erheblich erhöht. Ein solcher Zugkraftbedarf steht beim Pflügen einem wirtschaftlichen Pflugbetrieb entgegen.

Aus der DE 27 46 527 C3 ist ein Pflugkörper bekannt, bei dem an dem Streichblech in Richtung zum ungepflügten Erdboden hin eine Verlängerung in Gestalt eines Verlängerungsbleches vorgesehen ist, dessen vordere Begrenzung mit der Furchensohle einen rechten Winkel bildet. Die untere Begrenzung soll parallel zur Furchensohle, aber in geringerer Tiefe als diese verlaufen, womit erreicht werden soll, dass die von der Verlängerung erzeugte Furchensohle beim nächsten Durchgang des Pfluges als Lauffläche für die furchenseitigen Räder eines Schleppers dienen kann. Damit ist jedoch die Überführung von Krümeln des zu bearbeitenden Erdbodens aus einer zu erstellenden Furchensohle nicht möglich.

Es ist Aufgabe der vorliegenden Erfindung, einen Pflug der eingangs genannten Art dahingehend zu verbessern, dass eine relativ breite, möglichst krümelfreie breite Furche mit einem Pflugkörper des Pfluges zu erstellen ist, ohne dass der Zugkraftbedarf wesentlich erhöht ist.

Zur Lösung dieser Aufgabe zeichnet sich der Pflug der eingangs genannten Art dadurch aus, dass der Konturverlauf des Leitorgans in seiner Ausrichtung zur Furchensohle des zu bearbeitenden Erdreiches hin die Pflugschar eines Pflugkörpers um vorzugsweise nicht mehr als Dreiviertel der Höhe, vorzugsweise die halbe Höhe des Pflugschars nach unten überragt und einen Bereich des Leitbleches entgegen die Arbeitsrichtung des Pfluges hinter der Pflugschar und zur Furchensohle des zu bearbeitenden Bodens hin fortsetzt, in welchem ein dynamischer Wendevorgang des Furchenbalkens des zu bearbeitenden Erdreiches erfolgt.

Damit ist ein Pflug geschaffen, bei dem mit nur einem unwesentlichen höheren Zugkraftbedarf eine breite und annähernd krümelfreie Furche zu erstellen ist. Der untere Bereich des Leitorgans, vorzugsweise des Leitbleches, also der Bereich, der der Furchensohle des zu bearbeitenden Erdreiches zugewandt ist, hat zu dieser Furchensohle einen nicht unbeträchtlichen Abstand. Das Leitorgan unterstützt die Wendung dieses Furchenbalkens wesentlich in dessen unterem Bereich. Damit ist eine ausreichend große und im Wesentlichen saubere Furchensohlenbreite zu erreichen, indem auch etwaige Krümel des zu bearbeitenden Erdbodens, die durch das herkömmliche Streichblech entstehen können, zusätzlich innerhalb der Furche freigeräumt werden und mit dem Furchenbalken zur Seite in den bereits gepflügten Bereich geschoben werden können.

Das Leitorgan ist in einem Bereich des Streichbleches angeordnet, in welchem noch der dynamische Wendevorgang des Furchenbalkens durch das Leitblech erfolgt. Damit wird dieser dynamische Wendevorgang des Furchenbalkens zur größeren Furchenräumung energiegünstig und damit wirtschaftlich ausgenutzt, wodurch sich der nur unwesentlich höhere Zugkraftbedarf des Pfluges ergibt, obgleich eine saubere breite Furche zu erstellen ist.

Das Leitorgan schließt sich, ausgehend vom vorderen Bereich des Streichbleches bzw. ausgehend von der in Arbeitsrichtung gelegenen vorderen Pflugschar, stufenlos und somit annähernd stetig an die entsprechende untere Kante des Streichbleches, d.h. die untere Kante, die der Furchensohle zugewandt ist. Dabei kann sich das Leitorgan unmittelbar an die Pflugschar anschließen. Alternativ ist es jedoch auch möglich, dass das Leitorgan einen rückversetzten Lageabstand, d.h. also einen Abstand gegen die Arbeitsrichtung, zur vorgeordneten Pflugschar aufweist.

Wenn sich das Leitorgan unmittelbar an die Pflugschar anschließt, kann es so angeordnet sein, dass es die Trennlinie zwischen Pflugschar und dem oberhalb des Pflugschar angeordneten Bereich des Streichbleches im Wesentlichen unmittelbar fortsetzt und dann mit einem beispielsweise gekrümmten bzw. gebogenen Verlauf des Streichbleches wieder annähernd stufenlos bzw. stetig in die untere Kante des Streichbleches übergeht.

Das Leitorgan, also vorzugsweise das Leitblech, kann über geeignete Verbindungen auswechselbar mit dem Streichblech verbunden werden, so dass je nach Anforderung auch von der Kontur und von der Größe her unterschiedliche Leitorgane für verschiedene Anwendungszwecke an dem Streichblech vorgesehen werden können. Auch im Reparaturfall lassen sich solche Leitorgane einfach tauschen. Für viele Anwendungszwecke reicht es völlig aus, wenn der letzte Pflugkörper, bezogen auf die Zugrichtung bzw. Arbeitsrichtung des Pfluges, ein Streichblech aufweist, der mit dem entsprechenden Leitorgan versehen ist. Somit ist die letzte Furche nach einer Pflugfahrt breit und krümelfrei zu erstellen, wobei auch noch zusätzliche Bleche vorgesehen sein können, um die Furchenwand in senkrechter Ausrichtung sauber zu bearbeiten.

Der Pflug ist bevorzugtermaßen als Drehpflug ausgebildet mit zwei Pflugscharreihen, die von einem Zylinder zu drehen sind, wobei in jeder Reihe zumindest das letzte Streichblech eines Pflugkörpers mit dem Leitorgan zu versehen ist.

Die untere Kante des Leitorgans weist zumindest in dessen hinterer Hälfte einen stetig nach hinten und oben ansteigenden Verlauf auf.

Zusammenfassend wird durch das erfindungsgemäß ausgestaltete Leitorgan, welches das herkömmlich ausgestaltete Streichblech ergänzt und/oder erweitert, im Vergleich zu herkömmlichen Streichblechen eine vergrößerte und saubere Furchenräumung mit einem vergrößerten Furchenquerschnitt erreicht. Selbst Schlepperreifen mit einer Breite von 650mm bzw. 710mm walzen so nur noch einen geringen Bodenbereich des gepflügten Bodens wieder fest. Es ist so ein sauberer und guter Bodenschluss der Pflugfurche erreicht. Somit fehlt in der Pflugfurche kein lockerer Boden, der sonst beim Pflügen mit herkömmlich ausgestalteten Streichblechen durch die Schlepperreifen festgewalzt würde. Der in der Pflugfurche liegen bleibende Boden wird durch das das Streichblech nach unten und hinten ergänzende Leitorgan quer zur Furchensohle in Richtung des gepflügten Bodens zusätzlich verschoben. So werden diese sonst in der Furche verbleibenden Bodenkrumen nicht vom Schlepperreifen festgewalzt.

Zu weiteren Ausgestaltungen der Erfindung wird auf weitere Unteransprüche, die nachfolgende Beschreibung und die Zeichnung verwiesen. In der Zeichnung zeigen:
- Fig. 1: eine Seitenansicht auf ein Ausführungsbeispiel eines als Drehpflug ausgebildeten Pfluges nach der Erfindung;
- Fig. 2 bis 9: jeweils verschiedene Ausführungsbeispiele eines Pflugkörpers mit jeweiligem Leitorgan, welche jeweils in den Figuren mit den geraden Nummern in einer jeweiligen Seitenansicht und in den Figuren mit den ungeraden Nummern in der Ansicht von vorn dargestellt sind;
- Fig. 10, 11 und 12: eine schematische Querschnittsdarstellung einer Furche vor der Bearbeitung durch das Leitorgan, die Darstellung, was von der Furche noch freizuräumen ist, und die Darstellung, wenn die Furche freigeräumt ist;
- Fig. 13 bis 15: zu Fig. 10 bis 12 analoge Darstellungen bei einer noch breiter auszuräumenden Furche;

In der Zeichnung sind grundsätzlich gleichwirkende Teile mit übereinstimmenden Bezugsziffern versehen.

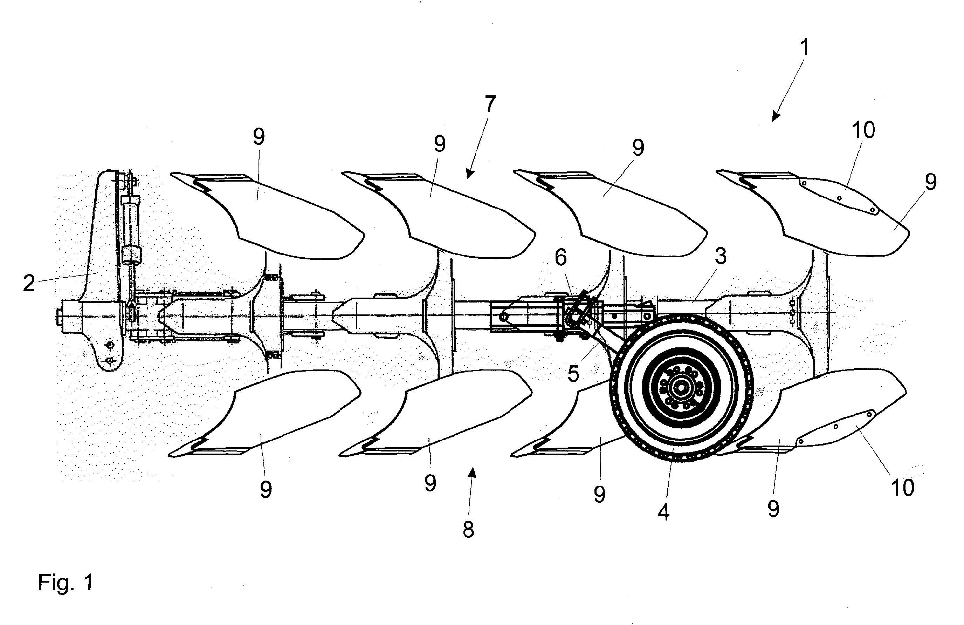

In Fig. 1 ist ein Ausführungsbeispiel eines mit allgemein mit 1 bezifferten Drehpfluges gezeigt, der über einen Anbaubock 2 an einen im Einzelnen nicht näher gezeigten landwirtschaftlichen Schlepper anhängbar ist und der einen Pflugrahmen 3 aufweist, der über ein Stützrad 4 auf dem Erdboden abzustützen ist. Das Stützrad 4 ist über einen Radarm 5 an einem Pflugrahmenteil 6 verschwenkbar abgestützt.

Der Pflugrahmen 3 trägt allgemein mit 7 und 8 bezifferte Pflugscharreihen mit Pflugkörpern 9, wobei der jeweils in der Reihe letzte Pflugkörper 9, ausgehend von der Arbeitsrichtung des Pfluges bzw. vom Anbaubock 2 betrachtet, mit einem Leitorgan 10 versehen ist, worauf im Späteren noch im Einzelnen einzugehen sein wird.

Diese Pflugkörper 9 haben jeweils ein Streichblech 11 sowie eine Pflugschar 12. Die jeweiligen Streichbleche 11 können eine übliche Streichblechgestaltung haben mit einer im Querschnitt im Wesentlichen schaufelförmigen und mithin leicht gewölbten oder kurvenförmigen Gestalt, die sich in ihrer Längsrichtung ebenfalls kurvenförmig oder schaufelförmig erstreckt, um einen dynamischen Wendevorgang für einen herauszuschälenden Furchenbalken des zu bearbeitenden Erdbodens durchführen zu können. Damit ist eine Furche zu erstellen, die zuvor vom Pflugschar geschnitten ist. Anstelle des Streichbleches können auch Streichblechstreifen, die mit Lageabstand zueinander angeordnet sind, als Streichblech vorgesehen sein, so dass der Begriff des Streichbleches diese Varianten erfasst.

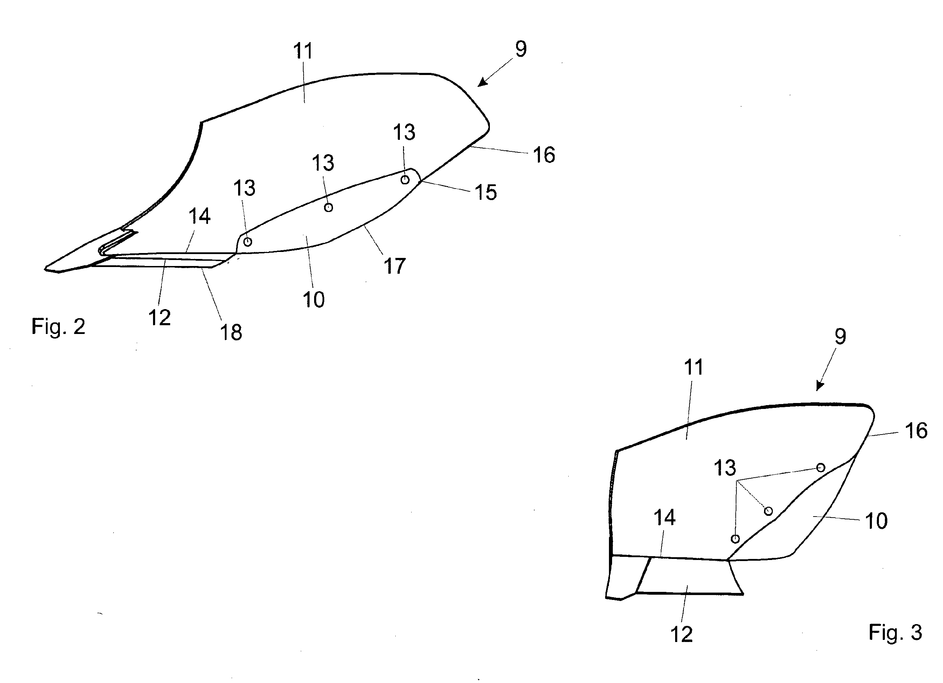

In dem Ausführungsbeispiel nach Fig. 2 und 3 erstreckt sich unmittelbar an die Pflugschar 12 anschließend das Leitorgan 10, das über Schrauben 13 mit dem Streichblech 11 verbunden ist. Dieses Leitorgan 10 hat hier eine Kontur dergestalt, dass sie die Trennlinie 14 zwischen Streichblech 11 und Pflugschar 12 unmittelbar fortsetzt. Danach hat es einen leicht gebogenen Verlauf, der im Wesentlichen einer Sichel ähnelt und das Streichblech 11 gegenüber ihrer normalen Kontur nur relativ geringfügig überragt, um dann stetig bei 15 wiederum in die untere Kante 16 des Streichbleches 11 überzugehen. Das Leitorgan 10 mit seiner unteren Kante 17 überragt jedoch die untere Kante 18 der Pflugschar nicht. In diesem Ausführungsbeispiel überragt die untere Kante 17 des Leitorgans auch nicht die untere Kante 16, die auch gleichfalls im vorderen Bereich die Trennlinie 14 zwischen Streichblech 11 und Pflugschar 12 ist.

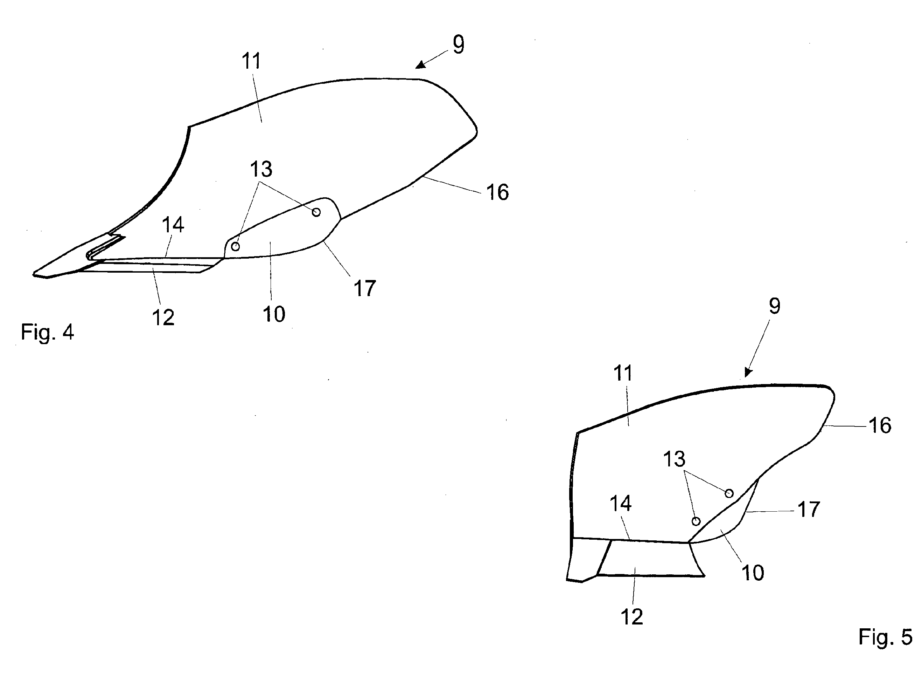

Ähnliches gilt auch für das Ausführungsbeispiel nach Fig. 4 und 5, wo das Leitorgan 10 nach Art einer rückwärtigen Flosse sich an das Streichblech 11 anschließt, und zwar wieder unmittelbar an die Trennlinie 14 zwischen Streichblech 11 und Pflugschar 12, um dann wiederum stetig in die untere Kante 16 des Streichbleches überzugehen.

In dem Ausführungsbeispiel nach Fig. 4 und 5 ist das Leitorgan 10 kürzer ausgebildet als in dem Ausführungsbeispiel nach Fig. 2 und 3, schließt sich allerdings auch wiederum unmittelbar an die Trennlinie 14 zwischen Streichblech 11 und Pflugschar an und geht wiederum ohne Stufe und mithin im Wesentlichen stetig mit seiner unteren Kante 17 in die untere Kante 16 des Streichbleches 11 über.

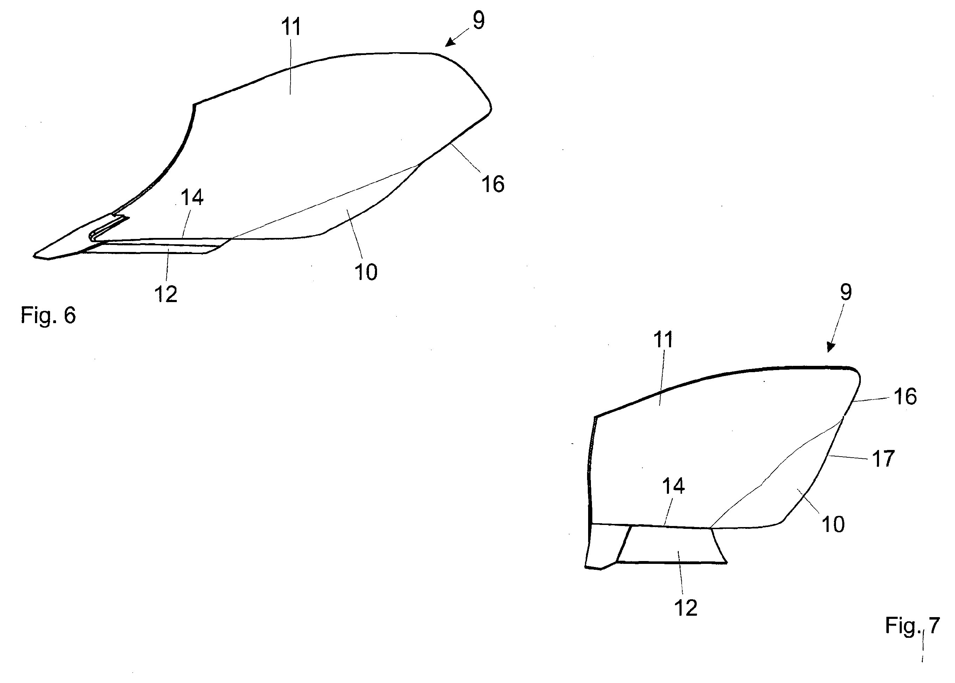

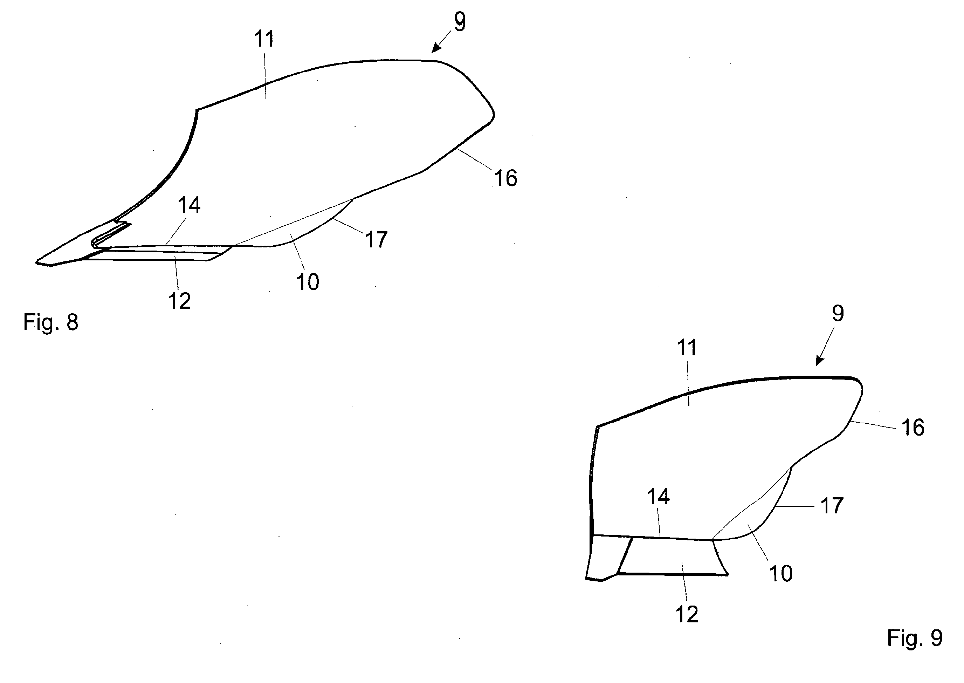

Ähnliche Verhältnisse sind auch bei den Ausführungsbeispielen nach den Fig. 6 und 7 anzutreffen, wobei dort die Leitorgane 10 wiederum eine andere Kontur und damit Formgebung haben.
Auch die Ausführungsbeispiele nach den Fig. 8 und 9 zeigen eine Anordnung und einen Verlauf des Leitorgans 10, der sich unmittelbar an die Trennlinie 14 zwischen Streichblech 11 und Pflugschar 12 anschließt, wobei hier unterschiedliche Krümmungen in der Formgebung mit der unteren Kante 17 dargestellt sind, die jedoch auch wiederum, und zwar mit unterschiedlichem Lageabstand zum rückwärtigen Bereich, in die Kontur des Streichbleches und in die untere Kante 16 übergehen.

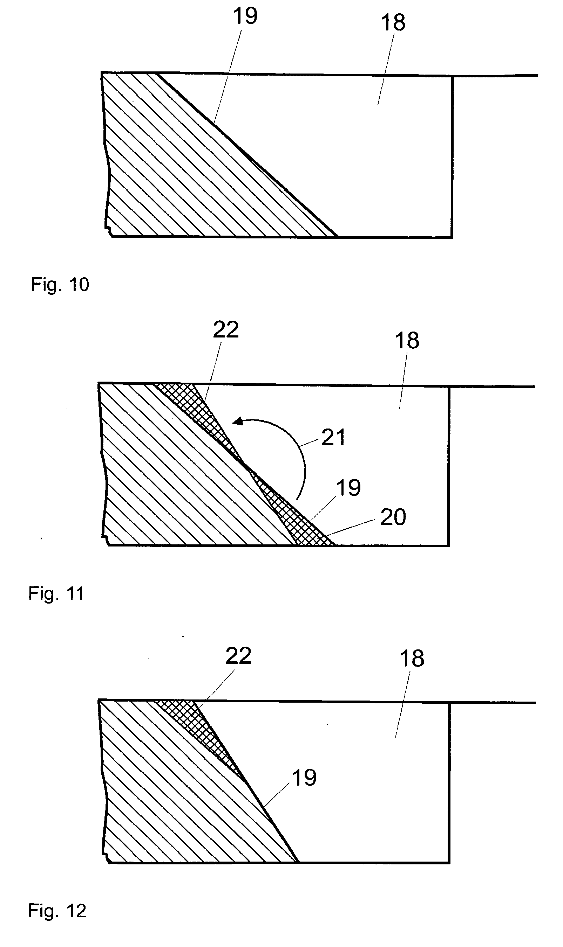

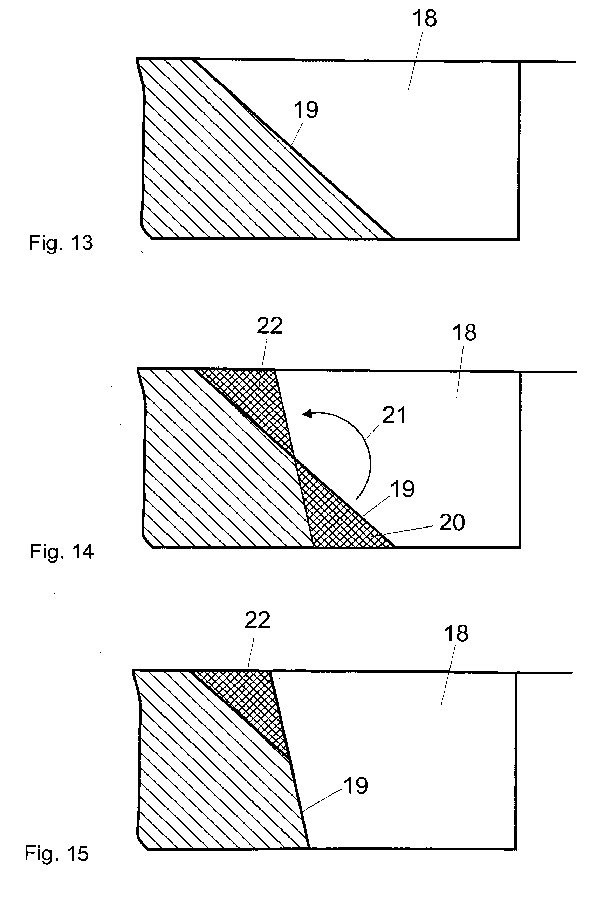

In Fig. 10 ist eine Furche 18 des zu bearbeitenden Erdbodens gezeigt, wobei die Furchenwand 19 einen diagonalen Verlauf hat. Dieser soll ein wenig begradigt werden, wie dies Fig. 11 zeigt, indem der durch Gitter gekennzeichnete Abschnitt darstellt, dass der untere Bereich 20 entsprechend der Pfeilrichtung 21 durch das Leitorgan und das Streichblech 11 in den oberen Bereich 22 überführt werden soll, wie dies in Fig. 12 dargestellt ist, woraus sich ergibt, dass die Furchenwand 19 weniger schräg verläuft mit der Konsequenz einer breiteren Furche 18. Eine analoge Darstellung ist in den Fig. 13, 14 und 15 dargestellt, bei der die aufgeschüttete Furchenwand 19 noch steiler dargestellt werden kann.

## Patentansprüche

1. Pflug (1), insbesondere Drehpflug, mit einem an einem Anbaubock (2) zur Verbindung des Pfluges (1) mit einem landwirtschaftlichen Schlepper befestigbaren, vorzugsweise über ein Stützrad (4) auf dem Erdboden abstützbaren Pflugrahmen (3) mit zumindest einer an dem Pflugrahmen angeordneten Pflugscharreihe (7,8) die jeweils Pflugkörper (9) mit einer Pflugschar (12) und einem Streichblech (11) aufweist, mit welchem ein Furchenbalken des zu bearbeitenden Erdbodens einem dynamischem Wendevorgang zu unterziehen ist, und mit einem sich in Arbeitsrichtung des Pfluges (1) hinter der Pflugschar (12) angeordneten, dem unteren Bereich des Streichbleches zugeordneten, sich in Richtung einer Furchensohle des zu bearbeitenden Erdbodens hin erstreckenden Leitorgan (10), **dadurch gekennzeichnet, dass** der Konturverlauf des Leitorgans (10) in seiner Ausrichtung zur Furchensohle des zu bearbeitenden Erdbodens hin die obere Kante des Pflugschars (12) eines Pflugkörpers (9) nicht nach unten überragt und einen Bereich des Streich bleches (11) entgegen der Arbeitsrichtung des Pfluges (1) hinter der Pflugschar (12) und zur Furchensohle des zu bearbeitenden Bodens hin fortsetzt, in welchem ein dynamischer Wendevorgang des Furchenbalkens des zu bearbeitenden Erdreiches erfolgt.

2. Pflug nach Anspruch 1, **dadurch gekennzeichnet, dass** das Leitorgan (10) in seinem vorderen in Arbeitsrichtung des Pfluges weisenden Bereich stufenlos in eine untere, der Furchensohle des zu bearbeitenden Erntebodens hin zugewandte Kante (16) des Streichbleches (11) übergeht.

3. Pflug nach einem der Ansprüche 1 bis 2, **dadurch gekennzeichnet, dass** sich das Leitorgan (10) unmittelbar an die Pflugschar (12) anschließt.

4. Pflug nach Anspruch 3, **dadurch gekennzeichnet, dass** das Leitorgan (10) mit seiner der Furchensohle des zu bearbeitenden Erntebodens hin zugewandten unteren Kante (17) die Trennlinie (14) zwischen dem Streichblech (11) und der Pflugschar (12) verlängert.

5. Pflug nach einem der Ansprüche 1 bis 3, **dadurch gekennzeichnet, dass** das Leitorgan (10) in seinem rückwärtigen Bereich stufenlos in eine in die der Furchensohle des zu bearbeitenden Erntebodens hin zugewandte untere Kante (16) des Streichbleches (11) übergeht.

6. Pflug nach einem der Ansprüche 1 bis 5, **dadurch gekennzeichnet, dass** das Leitorgan entgegen der Arbeitsrichtung des Pfluges (1) einen Abstand zu der Pflugschar (12) aufweist.

7. Pflug nach einem der Ansprüche 1 bis 6, **dadurch gekennzeichnet, dass** das Leitorgan (10) in das Streichblech (11) übergeht in einen Bereich, entgegen die Arbeitsrichtung des Pfluges (1) gesehen, der einen Abstand zum Ende des Streichbleches (11) aufweist, der kleiner ist als die Pflugscharlänge.

8. Pflug nach einem der Ansprüche 1 bis 7, **dadurch gekennzeichnet, dass** das Leitorgan (10) auswechselbar an dem Streichblech (11) gehaltert ist.

9. Pflug nach einem der Ansprüche 1 bis 8, **dadurch gekennzeichnet, dass** das Leitorgan (10) als Fortsetzung des Streichblechs ausgebildet ist.

10. Pflug nach einem der Ansprüche 1 bis 9, **dadurch gekennzeichnet, dass** nur der in Arbeitsrichtung des Pfluges (1) gesehene letzte Pflugkörper (9) mit dem Leitorgan (10) versehen ist, wohingegen die anderen diesem Pflugkörper (9) in Arbeitsrichtung vorgeordneten Pflugkörper (9) jeweils kein Leitorgan (10) aufweisen.

11. Pflug nach einem der Ansprüche 1 bis 9, **dadurch gekennzeichnet, dass** die untere Kante des Leitorgans zumindest in dessen hinteren Hälfte einen stetig nach hinten und oben ansteigenden Verlauf aufweist.

## Claims

1. Plough (1), in particular reversible plough, with a plough frame (3) which is fastenable to a headstock (2) for connecting the plough (1) to an agricultural tractor, is supportable on the ground preferably via a support wheel (4) and has at least one row of ploughshares (7, 8) arranged on the plough frame and each having a plough body (9) with a ploughshare (12) and a mouldboard (11), with which a furrow ridge of the ground to be cultivated can be subjected to a dynamic turning operation, and with a guiding member (10) which is arranged behind the ploughshare (12) in the working direction of the plough (1), is assigned to the lower region of the mouldboard and extends in the direction of a furrow base of the ground to be cultivated, **characterized in that** the contour profile of the guiding member (10), in the orientation thereof with respect to the furrow base of the ground to be cultivated, does not project downwards over the upper edge of the ploughshare (12) of a plough body (9) and continues a region of the mouldboard (11) counter to the working direction of the plough (1) behind the ploughshare (12) and towards the furrow base of the ground to be cultivated, in which region a dynamic turning operation of the furrow ridge of the soil to be cultivated takes place.

2. Plough according to Claim 1, **characterized in that** the guiding member (10) merges steplessly in the front region thereof, which faces in the working direction of the plough, into a lower edge (16) of the mouldboard (11), which edge faces the furrow base of the harvesting ground to be cultivated.

3. Plough according to either of Claims 1 and 2, **characterized in that** the guiding member (10) directly adjoins the ploughshare (12).

4. Plough according to Claim 3, **characterized in that** the guiding member (10), with the lower edge (17) thereof facing the furrow base of the harvesting ground to be cultivated, extends the separating line (14) between the mouldboard (11) and the ploughshare (12).

5. Plough according to one of Claims 1 to 3, **characterized in that** the guiding member (10) merges steplessly in the rear region thereof into a into the lower edge (16) of the mouldboard (11), which lower edge faces the furrow base of the harvesting ground to be cultivated.

6. Plough according to one of Claims 1 to 5, **characterized in that** the guiding member is at a distance from the plough share (12) counter to the working direction of the plough (1).

7. Plough according to one of Claims 1 to 6, **characterized in that** the guiding member (10) merges into the mouldboard (11) into a region, as seen counter to the working direction of the plough (1), which is at a distance from the end of the mouldboard (11), which distance is smaller than the ploughshare length.

8. Plough according to one of Claims to 7, **characterized in that** the guiding member (10) is held exchangeably on the mouldboard (11).

9. Plough according to one of Claims 1 to 8, **characterized in that** the guiding member (10) is designed as a continuation of the mouldboard.

10. Plough according to one of Claims 1 to 9, **characterized in that** only the final plough body (9), as seen in the working direction of the plough (1), is provided with the guiding member (10), whereas the other plough bodies (9) arranged upstream of said plough body (9) in the working direction in each case have no guiding member (10).

11. Plough according to one of Claims 1 to 9, **characterized in that** the lower edge of the guiding member has, at least in the rear half thereof, a profile which rises continuously rearwards and upwards.

## Revendications

1. Charrue (1), en particulier charrue brabant, comprenant un cadre de charrue (3) pouvant être fixé à un chevalet porté (2) pour la connexion de la charrue (1) à un tracteur agricole, pouvant être supporté sur le sol de préférence par le biais d'une roue de support (4), avec au moins une rangée de socs de charrue (7, 8) disposés sur le cadre de charrue, laquelle présente à chaque fois des corps de charrue (9) avec un soc de charrue (12) et un versoir (11), avec lequel une bande de sillon de la terre à travailler doit être soumise à une opération de retournement dynamique, et avec un organe de guidage (10) disposé derrière le soc de charrue (12) dans la direction de travail de la charrue (1), associé à la région inférieure du versoir, s'étendant dans la direction d'une semelle de sillon de la terre à travailler, **caractérisée en ce que** le contour de l'organe de guidage (10), dans son orientation vers la semelle de sillon de la terre à travailler, ne dépasse pas vers le bas l'arête supérieure du soc de charrue (12) d'un corps de charrue (9) et prolonge une région du versoir (11) dans le sens opposé à la direction de travail de la charrue (1) derrière le soc de charrue (12) et vers la semelle de sillon de la terre à travailler dans laquelle se produit une opération de retournement dynamique de la bande de sillon de la terre à travailler.

2. Charrue selon la revendication 1, **caractérisée en ce que** l'organe de guidage (10), dans sa région avant tournée dans la direction de travail de la charrue, se prolonge uniformément par une arête inférieure (16) du versoir (11) tournée vers la semelle de sillon de la terre à travailler.

3. Charrue selon l'une quelconque des revendications 1 et 2, **caractérisée en ce que** l'organe de guidage (10) se raccorde directement au soc de charrue (12).

4. Charrue selon la revendication 3, **caractérisée en ce que** l'organe de guidage (10) avec son arête inférieure (17) tournée vers la semelle de sillon de la terre à travailler prolonge la ligne de séparation (14) entre le versoir (11) et le soc de charrue (12).

5. Charrue selon l'une quelconque des revendications 1 à 3, **caractérisée en ce que** l'organe de guidage (10) se prolonge dans sa région arrière uniformément par une dans l'arête inférieure (16) du versoir (11) tournée vers la semelle de sillon de la terre à travailler.

6. Charrue selon l'une quelconque des revendications 1 à 5, **caractérisée en ce que** l'organe de guidage est espacé par rapport au soc de charrue (12) dans la direction opposée à la direction de travail de la charrue (1).

7. Charrue selon l'une quelconque des revendications 1 à 6, **caractérisée en ce que** l'organe de guidage (10) se prolonge par le versoir (11) dans une région, vue dans la direction opposée à la direction de travail de la charrue (1), qui est espacée de l'extrémité du versoir (11) d'un espacement inférieur à la longueur du soc de charrue.

8. Charrue selon l'une quelconque des revendications 1 à 7, **caractérisée en ce que** l'organe de guidage (10) est fixé de manière interchangeable sur le versoir (11).

9. Charrue selon l'une quelconque des revendications 1 à 8, **caractérisée en ce que** l'organe de guidage (10) est réalisé en tant que prolongement du versoir.

10. Charrue selon l'une quelconque des revendications 1 à 9, **caractérisée en ce que** seulement le dernier corps de charrue (9), vu dans la direction de travail de la charrue (1), est pourvu de l'organe de guidage (10), tandis que les autres corps de charrue (9) disposés avant ce corps de charrue (9) dans la direction de travail ne présentent pas d'organe de guidage (10) respectif.

11. Charrue selon l'une quelconque des revendications 1 à 9, **caractérisée en ce que** l'arête inférieure de l'organe de guidage présente, au moins dans sa moitié arrière, une allure montant de manière régulière vers l'arrière et vers le haut.
